# EUROPÄISCHE PATENTSCHRIFT

(11) **EP 3 597 515 B1**
(45) Veröffentlichungstag und Bekanntmachung des Hinweises auf die Patenterteilung: **04.09.2024**
(21) Anmeldenummer: 19183520.6
(22) Anmeldetag: 01.07.2019
(51) Int. Cl.: B62D 63/02, B62D 21/12, B62D 21/18, B62D 49/00

(54) **TRAGSTRUKTURELL UND VORZUGSWEISE FUNKTIONELL MODULAR AUFGEBAUTES NUTZFAHRZEUG-CHASSIS**
COMMERCIAL VEHICLE CHASSIS WITH MODULAR STRUCTURE AND PREFERABLY MODULAR FUNCTIONS
CHÂSSIS DE VÉHICULE UTILITAIRE STRUCTURELLEMENT PORTEUR ET, DE PRÉFÉRENCE FONCTIONNELLEMENT MODULAIRE

(30) Priorität: 16.07.2018 DE 102018117094
(43) Veröffentlichungstag der Anmeldung: 22.01.2020
(73) Patentinhaber: MAN Truck & Bus SE, 80995 München (DE)
(72) Erfinder: Sattler, Steve, 80992 München (DE); Hintereder, Jürgen, 80997 München (DE); Kondic, Darko, 85757 Karlsfeld (DE); Burger, Norbert, 84030 Ergolding (DE); Jahn, Danilo, 80809 München (DE); Kusch, Willi, 88239 Wangen im Allgäu (DE); Leisch, Andreas, 80999 München (DE)
(74) Vertreter: v. Bezold & Partner Patentanwälte - PartG mbB

(56) Entgegenhaltungen:
- CN-A- 103 754 265
- DE-A1- 10 150 052
- DE-T2- 602004 004 575
- US-A1- 2005 161 975
- US-A1- 2012 181 781

## Beschreibung

Die Erfindung betrifft eine Fahrzeugkonstruktion, vorzugsweise ein in seiner Längsrichtung z. B. tragstrukturell und insbesondere funktionell modular aufgebautes Fahrzeug-Chassis, insbesondere Nutzfahrzeug-Chassis.

Aus CN 103 754 265 B und US 2012/0181781 A1 sind modulare Fahrzeug-Chassis bekannt.

Im Stand der Technik sind auch sogenannte leiterrahmenförmige Nutzfahrzeug-Chassis mit zwei in Querrichtung voneinander beabstandeten einstückig-integral durchgängigen Längsträgern bekannt.

Derartige Nutzfahrzeug-Chassis werden in Abhängigkeit der Fahrzeuganwendung (z. B. Sattelzugmaschine, Kipper-Lastkraftwagen, etc.) konstruiert und weisen deshalb in Abhängigkeit der Fahrzeuganwendung z. B. unterschiedliche Längen, Breiten, Stärken, etc. auf. An die Nutzfahrzeug-Chassis sind ebenfalls in Abhängigkeit der Fahrzeuganwendung Funktionskomponenten (z. B. verschiedene Tanks, Motoren, Batterien, etc.) anmontiert. Einmal definiert und produziert bleibt das jeweilige Nutzfahrzeug-Chassis mitsamt seinen anmontierten Funktionskomponenten im Laufe der Fahrzeuglebensdauer üblicherweise unverändert bestehen. Nachträgliche Veränderungen sind, wenn überhaupt, nur mit erheblichem Umbau- und Anpassungsaufwand zu realisieren und führen zugleich meist zu einem Eingriff in die Fahrzeugstatik.

Die Anordnung der Funktionskomponenten am Nutzfahrzeug-Chassis wird vom zur Verfügung stehenden Raum beeinflusst. Dadurch ergeben sich Zwänge hinsichtlich der Anordnung von insbesondere großen Funktionskomponenten, deren technische Lösung meist in einer Stückelung der großen Funktionskomponenten besteht, z. B. die Stückelung eines großen Tanks in mehrere kleinere Tanks, wozu oftmals auch varianztreibende Adapterlösung erforderlich sind.

Eine Aufgabe der Erfindung ist es, eine bessere und/oder alternative Fahrzeugkonstruktion zu schaffen, insbesondere eine Fahrzeugkonstruktion, die in Bezug auf ihre Funktionskomponenten funktional flexibel veränderbar ist, insbesondere auch nach Endmontage des Gesamtfahrzeugs.

Diese Aufgabe kann mit den Merkmalen des Hauptanspruchs gelöst werden. Vorteilhafte Weiterbildungen sind in den Unteransprüchen offenbart oder ergeben sich aus der folgenden Beschreibung bevorzugter Ausführungsformen der Erfindung.

Die Erfindung schafft eine Fahrzeugkonstruktion, vorzugsweise ein in seiner Längsrichtung z. B. tragstrukturell und/oder funktionell modular aufgebautes Fahrzeug-Chassis, insbesondere Nutzfahrzeug-Chassis, z. B. Lastkraftwagen- oder Transporter-Chassis, mit einem Vorderachsmodul und einem Hinterachsmodul.

Die Fahrzeugkonstruktion zeichnet sich vor allem dadurch aus, dass zwischen dem Vorderachsmodul und dem Hinterachsmodul zumindest zwei vorzugsweise aneinander angrenzende und/oder zweckmäßig lösbar aneinander montierte Funktionsmodule angeordnet sind und die Funktionsmodule jeweils eine Tragstruktur aufweisen mit in Querrichtung der Fahrzeugkonstruktion voneinander beabstandeten Längsträgersegmenten. Die Längsträgersegmente der Tragstrukturen bilden in Querrichtung der Fahrzeugkonstruktion voneinander beabstandete Chassis-Längsträgerkonstruktionen.

Die Chassis-Längsträgerkonstruktionen sind somit vorzugsweise nicht einstückig-integral durchlaufend vom Vorderachsmodul zum Hinterachsmodul ausgeführt, sondern in deren Längsrichtung modular gestückelt ausgebildet.

Es ist möglich, dass die Tragstrukturen insbesondere lösbar tragstrukturell und/oder wiederholt montierbar miteinander verbunden sind, z. B. über Anschlussknoten-Paare.

Es ist möglich, dass die jeweilige Tragstruktur beidseitig zwei in Höhenrichtung der Fahrzeugkonstruktion voneinander beabstandete Längsträgersegmente aufweist, und/oder beidseitig zwei in Längsrichtung der Fahrzeugkonstruktion voneinander beabstandete Vertikalträgersegmente aufweist. Alternativ oder ergänzend kann zumindest eine der Tragstrukturen auch z. B. diagonal verlaufende Trägersegmente aufweisen.

Die jeweilige Tragstruktur kann z. B. zumindest einen, vorzugsweise zumindest zwei in Längsrichtung der Fahrzeugkonstruktion voneinander beabstandete Querträgersegmente (z. B. eine oder mehrere Schubaussteifungen, Ringspanten und/oder Schubbleche) aufweisen, vorzugsweise zwei obere in Längsrichtung der Fahrzeugkonstruktion voneinander beabstandete Querträgersegmente und/oder zwei untere in Längsrichtung der Fahrzeugkonstruktion voneinander beabstandete Querträgersegmente.

Erfindungsgemäß ist vorgesehen, dass die jeweilige Tragstruktur einzelne und/oder separate Anschlussknoten aufweist. Die Anschlussknoten können zweckmäßig z. B. lösbar oder unlösbar in die jeweilige Tragstruktur integriert sein.

Erfindungsgemäß ist alternativ oder ergänzend vorgesehen, dass das Vorderachsmodul und/oder das Hinterachsmodul einzelne und/oder separate Anschlussknoten aufweist. Die Anschlussknoten können zweckmäßig z. B. lösbar oder unlösbar am Vorderachsmodul und/oder am Hinterachsmodul zur Verfügung gestellt sein.

Die Anschlussknoten der jeweiligen Tragstruktur dienen zur lösbaren und/ wiederholt montierbaren Verbindung mit jeweils einem Längsträgersegment, einem Querträgersegment und einem Vertikalträgersegment der jeweiligen Tragstruktur. Auch hier können alternativ oder ergänzend z. B. diagonal verlaufende Trägersegmente zum Einsatz kommen.

Es ist möglich, dass benachbarte Anschlussknoten der Tragstrukturen zur lösbaren Verbindung und/oder wiederholt montierbaren Verbindung der Tragstrukturen miteinander dienen, so dass die Tragstrukturen über lösbar aneinander montierte Anschlussknoten miteinander verbunden sind. Benachbarte Anschlussknoten können somit vorzugsweise lösbar aneinander montiert sein und/oder Anschlussknoten-Paare bilden.

Es ist möglich, dass benachbarte Anschlussknoten des Vorderachsmoduls und einer der Tragstrukturen (z. B. Tragstruktur eines Technikmoduls) zur lösbaren Verbindung und/oder wiederholt montierbaren des Vorderachsmoduls mit der Tragstruktur (z. B. des Technikmoduls) dienen, so dass die Tragstruktur (z. B. des Technikmoduls) und das Vorderachsmodul über lösbar aneinander montierte Anschlussknoten miteinander verbunden sein können. Benachbarte Anschlussknoten können somit vorzugsweise lösbar aneinander montiert sein und/oder Anschlussknoten-Paare bilden.

Alternativ oder ergänzend können benachbarte Anschlussknoten des Hinterachsmoduls und einer der Tragstrukturen (z. B. Tragstruktur eines Energiemoduls) zur lösbaren Verbindung und/oder wiederholt montierbaren des Hinterachsmoduls mit der Tragstruktur (z. B. des Energiemoduls) dienen, so dass die Tragstruktur (z. B. des Energiemoduls) und das Hinterachsmodul über lösbar aneinander montierte Anschlussknoten miteinander verbunden sein können. Benachbarte Anschlussknoten können somit vorzugsweise lösbar aneinander montiert sein und/oder Anschlussknoten-Paare bilden.

Es ist möglich, dass aneinander montierte Anschlussknoten in Längsrichtung der Fahrzeugkonstruktion auf Stoß aneinander anliegen, und/oder über jeweils eine in Höhen- und in Querrichtung der Fahrzeugkonstruktion ausgerichtete Schnittebene voneinander trennbar sind.

Die jeweilige Tragstruktur weist vier vordere Anschlussknoten und vier hintere Anschlussknoten auf, wobei die vier vorderen Anschlussknoten und die vier hinteren Anschlussknoten Eckpunkte der jeweiligen Tragstruktur bilden.

Es ist möglich, dass die jeweilige Tragstruktur eine im Wesentlichen Quaderform bildet und die Quaderform z. B. durch die Anschlussknoten und alternativ oder ergänzend durch die Längsträgersegmente, die Querträgersegmente und/oder die Vertikalträgersegmente der jeweiligen Tragstruktur definiert wird. Dadurch können im Wesentlichen quaderförmige Funktionsmodule erzeugt werden.

Es ist möglich, dass die jeweilige Tragstruktur als (z. B. im Wesentlichen quaderförmige) Gitter- oder Geripperahmenkonstruktion ausgebildet ist.

Es ist möglich, dass das Vorderachsmodul in Querrichtung der Fahrzeugkonstruktion voneinander beabstandete Längsträgersegmente aufweist und z. B. die Längsträgersegmente des Vorderachsmoduls in Querrichtung der Fahrzeugkonstruktion voneinander beabstandete Chassis-Längsträgerkonstruktionen bilden, und/oder das Hinterachsmodul in Querrichtung der Fahrzeugkonstruktion voneinander beabstandete Längsträgersegmente aufweist und z. B. die Längsträgersegmente des Hinterachsmoduls in Querrichtung der Fahrzeugkonstruktion voneinander beabstandete Chassis-Längsträgerkonstruktionen bilden.

Die Tragstrukturen sind vorzugsweise selbstragend ausgebildet (und insbesondere entsprechend ihrer Aufgabe in der Gesamttragstruktur dimensioniert).

Die Funktionsmodule und insbesondere die Tragstrukturen sind vorzugsweise mit z. B. unterschiedlichen Funktionskomponenten (z. B. einer oder mehreren Batterien, Energiespeichersystemen (z. B. Wasserstofftanks oder Gastanks), Traktionsbatterien, Druckluft-Tanks, Kraftstoff-Tanks, Reduktionsmittel-Tanks, Motoren, Steuerungseinrichtungen, Pumpen- und/oder Kühlsystemen, Beladungs- und/oder Betankungssystemen, und/oder Luftaufbereitungssystemen (z. B. Luftpresser etc.) ausgestattet.

Es ist möglich, dass eine oder mehrere lösbare mediale Schnittstellen (z. B. Steckverbindungen, Klemmen, Verschraubungen, Leitungs- oder Rohrverbinder, etc.) vorhanden sind, um eine oder mehrere Funktionskomponenten des einen Funktionsmoduls (z. B. Technikmodul) mit einer oder mehreren Funktionskomponenten des anderen Funktionsmoduls (z. B. Energiemodul) lösbar zu verbinden, so dass nicht nur die Tragstrukturen der Funktionsmodule lösbar miteinander verbunden sind, sondern auch Funktionskomponenten der Funktionsmodule. Dadurch können die Funktionsmodule jeweils eine z. B. tragstrukturelle und funktionelle modulare Einheit bilden, die z. B. als tragstrukturelle und funktionelle modulare Einheit aus der Fahrzeugkonstruktion entfernt (z. B. ausgetauscht) werden kann.

Die eine oder die mehreren medialen Schnittstellen können im Kontext der Erfindung zur Übertragung von vorzugsweise elektrischer Energie, Druckluft, eines Fluids, einer Flüssigkeit, Steuer- oder Regelungsbefehlen, Daten und/oder Informationen etc. dienen.

Es ist möglich, dass das jeweilige Funktionsmodul mitsamt seiner Tragstruktur und mitsamt seinen Funktionskomponenten als tragstrukturelle und funktionelle Einheit aus der Fahrzeugkonstruktion entfernt werden kann und/oder durch ein anderes (vorzugsweise wie hierin offenbartes) Funktionsmodul ersetzt werden kann.

Die Funktionsmodule können zweckmäßig somit mitsamt Tragstruktur und mitsamt Funktionskomponenten als jeweils funktional und tragstrukturell voneinander trennbare Einheiten ausgebildet sein. Die Funktionsmodule können somit z. B. autark austauschbare Einheiten bilden.

Die Fahrzeugkonstruktion und somit insbesondere das Gesamtfahrzeug kann vorzugsweise aus Funktionsmodulen mit voneinander abgegrenzten Funktionen (Aufgaben) aufgebaut und zusammengesetzt werden.

Dadurch, dass nicht nur die Tragstrukturen der Funktionsmodule lösbar miteinander verbunden sind, sondern auch die Funktionskomponenten der Funktionsmodule, kann z. B. ermöglicht werden, dass jedes Funktionsmodul eine insbesondere für sich abgeschlossene funktionale Einheit bildet.

Die Funktionsgrenze des jeweiligen Funktionsmoduls kann insbesondere der jeweiligen Funktionsmodulgrenze entsprechen.

Die Fahrzeugkonstruktion ist modular, insbesondere modulbaukastenartig, umkonfigurierbar, insbesondere auch nach der ursprünglichen Endmontage der Fahrzeugkonstruktion.

Die Fahrzeugkonstruktion kann vorzugsweise mittels des Vorderachsmoduls, des Hinterachsmoduls und/oder der Funktionsmodule modular auflösbar aufgebaut werden, so dass im Bedarfsfall das Vorderachsmodul, das Hinterachsmodul und/oder zumindest eines der Funktionsmodule durch ein anderes Modul ersetzt werden kann und/oder ein zusätzliches (z. B. wie hierin offenbartes Funktionsmodul) zwischen das Vorderachsmodul und das Hinterachsmodul integriert werden kann.

Es ist möglich, dass das Vorderachsmodul und/oder das Hinterachsmodul mit Rädern versehen ist.

Die Innenseiten der Räder können in Querrichtung der Fahrzeugkonstruktion z. B. voneinander beabstandet sein, wobei sich die Längsträgersegmente der Tragstrukturen z. B. beidseitig seitlich außerhalb der Innenseiten der Räder erstrecken können.

Die Funktionsmodule können z. B. ein Energiemodul und/oder ein Technikmodul umfassen.

Das Energiemodul kann als Funktionskomponenten z. B. zumindest ein Energiespeichersystem (z. B. eine Batterieanordnung, einen Gastank und/oder einen Wasserstofftank) zur zweckmäßigen Versorgung von Fahrzeugkomponenten mit Energie und/oder eine Traktionsbatterieanordnung zur Versorgung zumindest eines Elektromotors zur Fortbewegung der Fahrzeugkonstruktion umfassen.

Das Technikmodul kann als Funktionskomponenten z. B. eine Luftaufbereitungseinrichtung (z. B. einen Luftpresser), zumindest einen Druckluftspeicher, ein elektronisches Bremsassistenzsystem, zumindest ein Pumpen- und/oder Kühlsystem, zumindest ein Beladungs- und/oder Betankungssystem und/oder ein Antiblockiersystem umfassen.

Die Fahrzeugkonstruktion kann z. B. zumindest einen Elektromotor (z. B. eine Starrachse mit integrierten, vorzugsweise zwei Elektromotoren für jedes Antriebsrad oder eine DeDion-Starrachse mit tragstrukturfesten, vorzugsweise zwei Elektromotoren) zur Fortbewegung der Fahrzeugkonstruktion umfassen, wobei der Elektromotor z. B. in einem der Funktionsmodule, insbesondere dem Technikmodul, untergebracht sein kann oder durch das Hinterachsmodul getragen sein kann.

Es ist möglich, dass in Längsrichtung der Fahrzeugkonstruktion das Technikmodul unmittelbar oder mittelbar hinter dem Vorderachsmodul angeordnet ist, das Energiemodul mittelbar oder unmittelbar hinter dem Technikmodul angeordnet ist und/oder das Hinterachsmodul mittelbar oder unmittelbar hinter dem Energiemodul angeordnet ist. Es ist auch möglich, dass das Technikmodul mittelbar oder unmittelbar hinter dem Energiemodul angeordnet ist.

Es ist möglich, dass die Fahrzeugkonstruktion ein Modul zur Aufnahme einer Nutzfahrzeug-Kabine aufweist und vorzugsweise das Modul auf das Vorderachsmodul aufgesetzt sein kann.

Zumindest eine der Tragstrukturen kann zumindest eine in einer im Wesentlichen horizontalen Ebene ausgerichtete Platte und/oder Diagonalverstrebung zur Aussteifung der Tragstruktur umfassen (z. B. zur Erhöhung der Torsionssteifigkeit). Es können z. B. eine obere Platte und/oder eine untere Platte zur Verfügung gestellt werden.

Alternativ oder ergänzend kann zumindest eine der Tragstrukturen zumindest eine in einer im Wesentlichen vertikalen Ebene ausgerichtete Platte und/oder Diagonalverstrebung zur Aussteifung der Tragstruktur umfassen (z. B. zur Erhöhung der Torsionssteifigkeit). Die zumindest eine im Wesentlichen vertikale Ebene kann sich dabei vorzugsweise in Längsrichtung und/oder Querrichtung der Fahrzeugkonstruktion erstrecken.

Die zumindest eine Platte kann z. B. Funktionskomponenten tragen und z. B. zusätzlich zur Aussteifung der Tragstruktur beitragen.

Die zumindest eine Platte kann z. B. als vorzugsweise profilierte Lochplatte, als Lochblech, als Sandwich-Konstruktion mit vorzugsweise Materialmix Metall und Kunststoff etc. ausgeführt sein.

Es ist möglich, dass zumindest eine der Funktionskomponenten eine insbesondere eigene Tragkonstruktion umfasst und die Tragkonstruktion z. B. einen mittragenden und/oder aussteifenden Teil der zugehörigen Tragstruktur bildet. Die Tragkonstruktion kann z. B. direkt oder über zweckmäßig elastische Entkopplungselemente an oder in die zugehörige Tragstruktur montiert sein.

Funktionskomponenten können somit mittels der Tragkonstruktion z. B. eine direkte oder über elastische Entkoppelungselemente übertragene Tragwirkung innerhalb der Tragstruktur und somit innerhalb der Fahrzeugkonstruktion (zweckmäßig Gesamttragstruktur) übernehmen.

Folglich ist es möglich, dass die Funktionskomponenten die zugehörige Tragstruktur z. B. nicht nur tragstrukturell belasten, sondern mittels der Tragkonstruktion auch insbesondere tragstrukturell entlasten und/oder aussteifen. Die Tragkonstruktion kann somit tragstrukturell in die zugehörige Tragstruktur integriert sein.

Es ist möglich, dass zumindest eine der Tragstrukturen mit einer Seitencrasheinrichtung versehen ist, um Funktionskomponenten in der zugehörigen Tragstruktur vor einem Seitencrash zu schützen. Z. B. kann die zuvor erwähnte Platte und/oder Diagonalverstrebung in der vertikalen Ebene zumindest einen Teil der Seitencrasheinrichtung bilden.

Zu erwähnen ist noch, dass die Tragstrukturen, optional mit Ausnahme ihrer Längen in Längsrichtung der Fahrzeugkonstruktion, im Wesentlichen baugleich ausgeführt sein können.

Zu erwähnen ist außerdem, dass die hierin erwähnte "lösbare Verbindung" vorzugsweise ausgeführt sein kann, so dass die lösbar miteinander verbundenen Teile insbesondere wiederholt montierbar sind, also z. B. mehrfach voneinander getrennt und wieder aneinander montiert werden können.

Die Erfindung umfasst auch ein Gesamtfahrzeug z. B. in Form eines Nutzfahrzeugs, vorzugsweise ein Lastkraftwagen (z. B. Sattelzugmaschine oder Transporter), mit einer Fahrzeugkonstruktion wie hierin offenbart.

Das Nutzfahrzeug kann z. B. eine maximale Länge in Querrichtung der Fahrzeugkonstruktion aufweisen, wobei zumindest eine der Tragstrukturen eine maximale Länge in Querrichtung der Fahrzeugkonstruktion aufweisen kann. Es ist möglich, dass die maximale Länge der Tragstruktur in Querrichtung der Fahrzeugkonstruktion zumindest 80%, zumindest 90% oder zumindest 95% der maximalen Länge des Nutzfahrzeugs in Querrichtung der Fahrzeugkonstruktion entspricht.

Die zuvor beschriebenen bevorzugten Ausführungsformen und Merkmale der Erfindung sind beliebig miteinander kombinierbar. Andere vorteilhafte Weiterbildungen der Erfindung sind in den Unteransprüchen offenbart oder ergeben sich aus der nachstehenden Beschreibung bevorzugter Ausführungsformen der Erfindung in Verbindung mit den beigefügten Figuren.
- Figur 1: zeigt eine perspektivische Explosionsdarstellung einer Fahrzeugkonstruktion gemäß einer Ausführungsform der Erfindung,
- Figur 2: zeigt eine perspektivische Darstellung der Fahrzeugkonstruktion der Figur 1 in zusammengebautem Zustand,
- Figur 3: zeigt eine vergrößerte Darstellung der Fahrzeugkonstruktion der Figuren 1 und 2,
- Figuren 4 bis 6: zeigen vergrößerte Darstellungen der Fahrzeugkonstruktion der Figuren 1 bis 3, und
- Figur 7: zeigt eine perspektivische Darstellung einer Fahrzeugkonstruktion in zusammengebautem Zustand gemäß einer Ausführungsform der Erfindung.

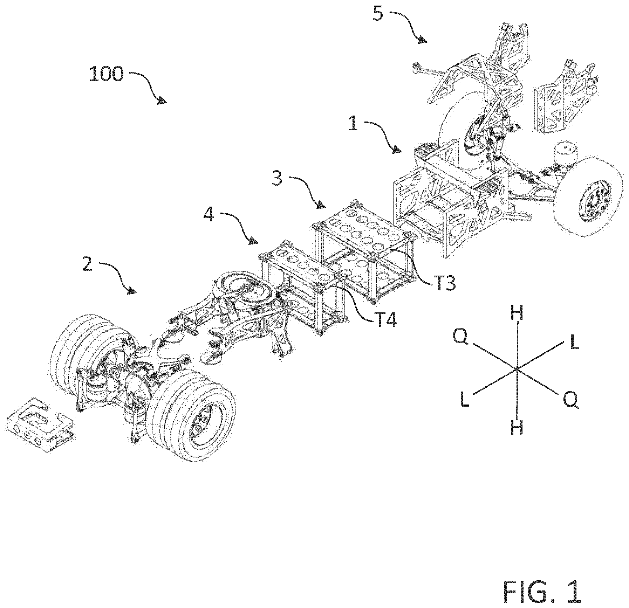

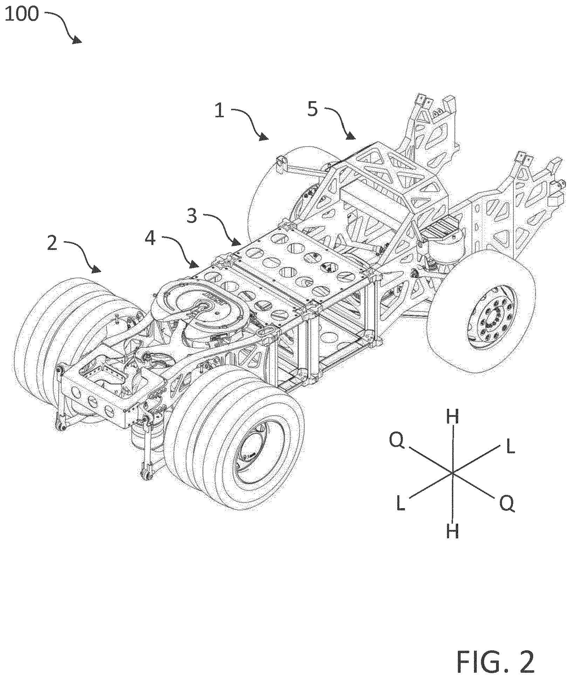

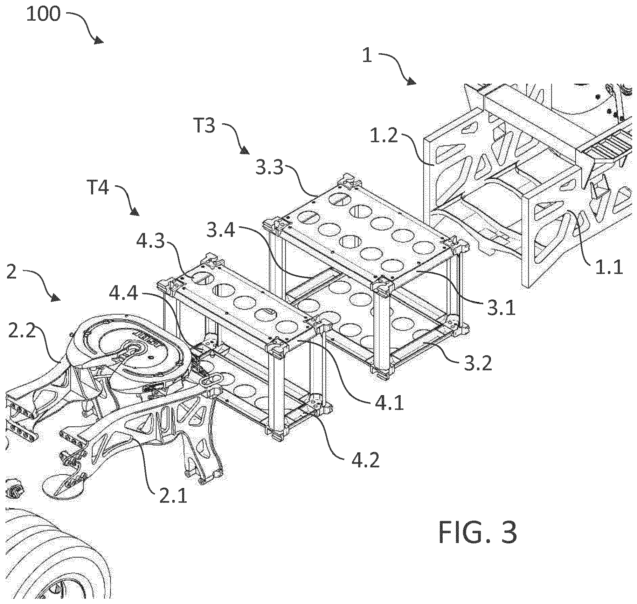

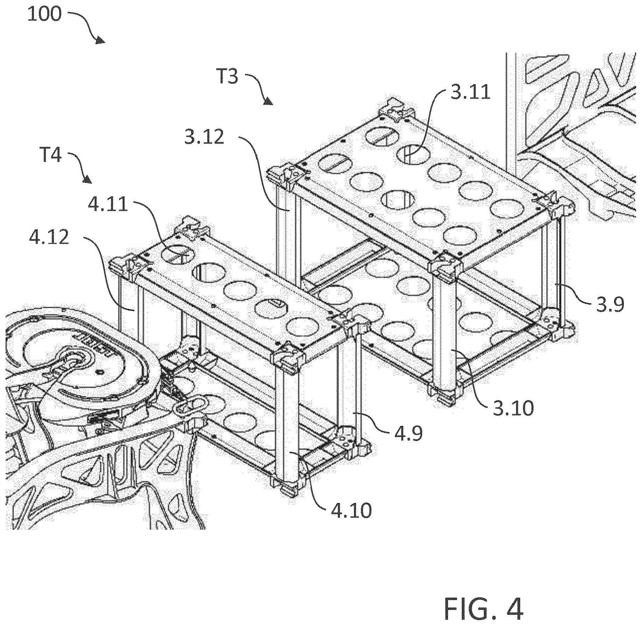

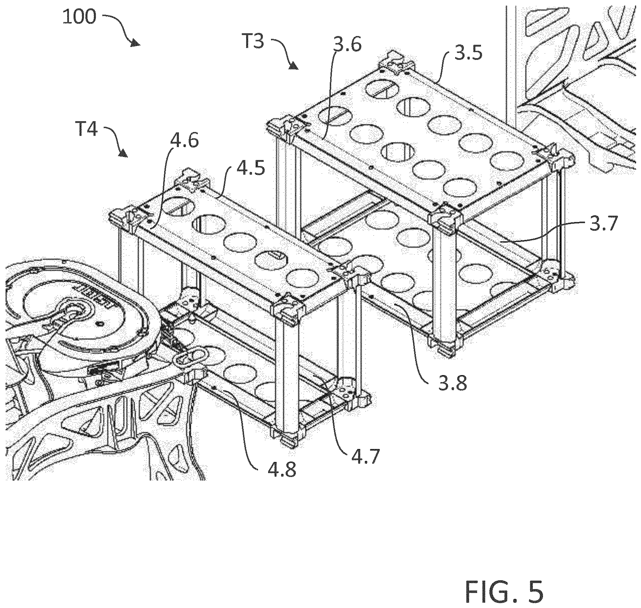

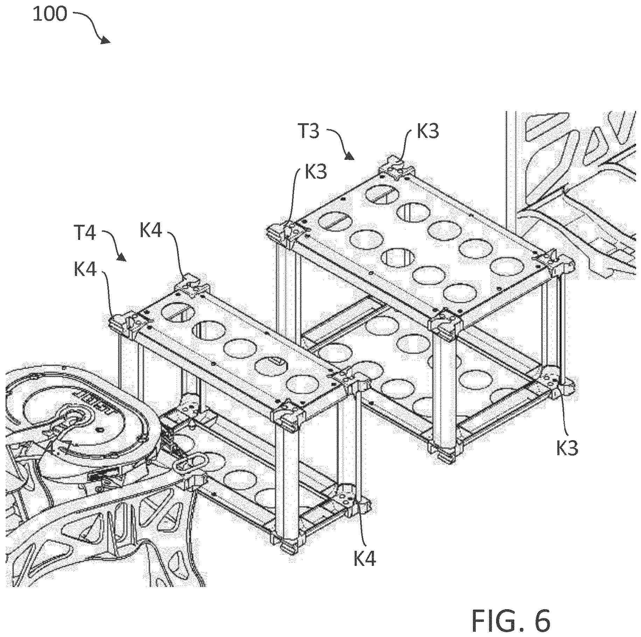

Eine Fahrzeugkonstruktion 100 gemäß einer Ausführungsform der Erfindung wird nachfolgend unter Bezugnahme auf die Figuren 1 bis 6 beschrieben, wobei darin der Übersichtlichkeit halber nicht alle Teile mit Bezugszeichen versehen sind.

Die Fahrzeugkonstruktion 100 ist als ein in seiner Längsrichtung L tragstrukturell und vorzugsweise funktionell modular aufgebautes Fahrzeug-Chassis für ein Gesamtfahrzeug in Form eines Nutzfahrzeugs, insbesondere einer Sattelzugmaschine, ausgeführt.

Die Fahrzeugkonstruktion 100 umfasst ein mit Rädern versehenes Vorderachsmodul 1 und ein mit einer Zwillingsbereifung versehenes Hinterachasmodul 2. Auf das Vorderachsmodul 1 ist ein optionales Modul 5 zur Aufnahme einer Nutzfahrzeug-Kabine aufgesetzt.

Zwischen dem Vorderachsmodul 1 und dem Hinterachsmodul 2 sind zwei in Längsrichtung L der Fahrzeugkonstruktion 100 benachbarte Funktionsmodule 3 und 4 angeordnet, nämlich ein erstes Funktionsmodul 3 und ein zweites Funktionsmodul 4, wobei im Kontext der Erfindung auch z. B. mehr als zwei Funktionsmodule zwischen dem Vorderachsmodul 1 und dem Hinterachsmodul 2 angeordnet werden können.

Das erste Funktionsmodul 3 umfasst eine Tragstruktur T3 und ist als Technikmodul ausgebildet. Das erste Funktionsmodul 3 kann z. B. folgende, der Übersichtlichkeit halber nicht gezeigte Funktionskomponenten umfassen: eine Luftaufbereitungseinrichtung, zumindest einen Druckluftspeicher, einen Elektromotor zur Fortbewegung der Fahrzeugkonstruktion 100, ein elektronisches Bremsassistenzsystem und/oder ein Antiblockiersystem.

Das zweite Funktionsmodul 4 umfasst eine Tragstruktur T4 und ist als Energiemodul ausgebildet. Das zweite Funktionsmodul 4 kann z. B. folgende, der Übersichtlichkeit halber nicht gezeigte Funktionskomponenten umfassen: eine Batterieanordnung zur Versorgung elektrischer Fahrzeugkomponenten und/oder eine Traktionsbatterieanordnung zur Versorgung eines Elektromotors zur Fortbewegung der Fahrzeugkonstruktion 100.

Die Tragstruktur T3 des ersten Funktionsmoduls 3 und die Tragstruktur T4 des zweiten Funktionsmoduls 4 können, optional mit Ausnahme ihrer Länge in Längsrichtung L der Fahrzeugkonstruktion 100, im Wesentlichen baugleich ausgeführt werden.

Die TragstrukturT3 des ersten Funktionsmoduls 3 umfasst in Querrichtung Q der Fahrzeugkonstruktion 100 voneinander beabstandete Längsträgersegmente 3.1 bis 3.4, wobei die Längsträgersegmente 3.1 bis 3.4 in Querrichtung Q der Fahrzeugkonstruktion 100 voneinander beabstandete Chassis-Längsträgerkonstruktionen bilden.

Die TragstrukturT4 des zweiten Funktionsmoduls 4 umfasst ebenfalls in Querrichtung Q der Fahrzeugkonstruktion 100 voneinander beabstandete Längsträgersegmente 4.1 bis 4.4, wobei die Längsträgersegmente 4.1 bis 4.4 in Querrichtung Q der Fahrzeugkonstruktion 100 voneinander beabstandete Chassis-Längsträgerkonstruktionen bilden.

Die zwei Chassis-Längsträgerkonstruktionen der Fahrzeugkonstruktion 100 sind somit nicht einstückig-integral durchlaufend vom Vorderachsmodul 1 zum Hinterachsmodul 2, sondern in Längsrichtung L der Fahrzeugkonstruktion 100 gestückelt ausgebildet.

Die Tragstruktur T3 des ersten Funktionsmoduls 3 umfasst beidseitig zwei in Höhenrichtung H der Fahrzeugkonstruktion 100 voneinander beabstandete Längsträgersegmente 3.1 bis 3.4 und beidseitig zwei in Längsrichtung L der Fahrzeugkonstruktion 100 voneinander beabstandete Vertikalträgersegmente 3.9 bis 3.12 und zusätzlich zwei obere in Längsrichtung L der Fahrzeugkonstruktion 100 voneinander beabstandete Querträgersegmente 3.5 bis 3.6 und zwei untere in Längsrichtung L der Fahrzeugkonstruktion 100 voneinander beabstandete Querträgersegmente 3.7 bis 3.8. Die erste Tragstruktur T3 nimmt dadurch eine im Wesentlichen quaderförmige Gestalt an.

Die Tragstruktur T3 des ersten Funktionsmoduls 3 umfasst darüber hinaus vier vordere Anschlussknoten und vier hintere Anschlussknoten, die einheitlich mit dem Bezugszeichen K3 versehen sind. Die Anschlussknoten K3 dienen zur zweckmäßig lösbaren oder unlösbaren Verbindung mit jeweils einem Längsträgersegment 3.1 bis 3.4, einem Querträgersegment 3.5 bis 3.8 und einem Vertikalträgersegment 3.9 bis 3.12.

Die Tragstruktur T4 des zweiten Funktionsmoduls 4 umfasst ebenfalls beidseitig zwei in Höhenrichtung H der Fahrzeugkonstruktion 100 voneinander beabstandete Längsträgersegmente 4.1 bis 4.4 und beidseitig zwei in Längsrichtung L der Fahrzeugkonstruktion 100 voneinander beabstandete Vertikalträgersegmente 4.9 bis 4.12 und zusätzlich zwei obere in Längsrichtung L der Fahrzeugkonstruktion 100 voneinander beabstandete Querträgersegmente 4.5 bis 4.6 und zwei untere in Längsrichtung L der Fahrzeugkonstruktion 100 voneinander beabstandete Querträgersegmente 4.7 bis 4.8. Die zweite Tragstruktur T4 nimmt dadurch eine im Wesentlichen quaderförmige Gestalt an.

Die Tragstruktur T4 des zweiten Funktionsmoduls 4 umfasst darüber hinaus vier vordere Anschlussknoten und vier hintere Anschlussknoten, die einheitlich mit dem Bezugszeichen K4 versehen sind. Die Anschlussknoten K4 dienen zur zweckmäßig lösbaren oder unlösbaren Verbindung mit jeweils einem Längsträgersegment 4.1 bis 4.4, einem Querträgersegment 4.5 bis 4.8 und einem Vertikalträgersegment 4.9 bis 4.12.

Benachbarte Anschlussknoten K3 und K4 der ersten Tragstruktur T3 und der zweiten Tragstruktur T4 (in der gezeigten Ausführungsform vier Anschlussknoten-Paare) sind lösbar aneinander montiert und dienen somit zusätzlich dazu, die erste Tragstruktur T3 lösbar mit der zweiten Tragstruktur T4 zu verbinden.

Die Längsträgersegmente 3.1 bis 3.4 der ersten Tragstruktur T3 und die Längsträgersegmente 4.1 bis 4.4 der zweiten Tragstruktur T4 sind folglich über Anschlussknoten-Paare in Längsrichtung L der Fahrzeugkonstruktion 100 lösbar miteinander verknüpft.

Auch das Vorderachsmodul 1 umfasst in Querrichtung Q der Fahrzeugkonstruktion 100 voneinander beabstandete Längsträgersegmente 1.1 und 1.2, wobei die Längsträgersegmente 1.1 und 1.2 des Vorderachsmoduls 1 in Querrichtung Q der Fahrzeugkonstruktion 100 voneinander beabstandete Chassis-Längsträgerkonstruktionen bilden. Ebenfalls umfasst das Hinterachsmodul 2 in Querrichtung Q der Fahrzeugkonstruktion 100 voneinander beabstandete Längsträgersegmente 2.1 und 2.2, wobei die Längsträgersegmente 2.1 und 2.2 des Hinterachsmoduls 2 in Querrichtung Q der Fahrzeugkonstruktion 100 voneinander beabstandete Chassis-Längsträgerkonstruktionen bilden.

Auch das Vorderachsmodul 1 und das Hinterachsmodul 2 können vorzugsweise jeweils vier Anschlussknoten aufweisen, die jedoch nicht oder nicht vollständig in den Figuren gezeigt sind.

Somit können benachbarte Anschlussknoten des Vorderachsmoduls 1 und der ersten Tragstruktur T3 zur lösbaren Verbindung des Vorderachsmoduls 1 mit der ersten Tragstruktur T3 dienen, so dass die erste Tragstruktur T3 und das Vorderachsmodul 1 über lösbar aneinander montierte Anschlussknoten miteinander verbunden sein können, wobei benachbarte Anschlussknoten des Hinterachsmoduls 2 und der zweiten Tragstruktur T4 zur lösbaren Verbindung des Hinterachsmoduls 2 mit der zweiten Tragstruktur T4 dienen können, so dass die zweite Tragstruktur T4 und das Hinterachsmodul 2 über lösbar aneinander montierte Anschlussknoten miteinander verbunden sein können.

Die Anschlussknoten aneinander montierter Anschlussknoten-Paare liegen zweckmäßig in Längsrichtung L der Fahrzeugkonstruktion 100 auf Stoß aneinander an und/oder sind über jeweils eine in Höhen- und in Querrichtung H und Q der Fahrzeugkonstruktion 100 ausgerichtete Schnittebene voneinander trennbar sind.

De erste Tragstruktur T3 umfasst eine obere Platte und eine untere Platte zum Tragen der Funktionskomponenten und zur Aussteifung der Tragstruktur T3, wobei die zweite Tragstruktur T4 ebenfalls eine obere Platte und eine untere Platte zum Tragen der Funktionskomponenten und zur Aussteifung der Tragstruktur T4 umfasst.

Funktionskomponenten des ersten Funktionsmoduls 3 können mit Funktionskomponenten des zweiten Funktionsmoduls 4 über nicht gezeigte lösbare mediale Schnittstellen verbunden sein, zur zweckmäßigen Übertragung von z. B. elektrischer Energie, Druckluft, Fluiden, Flüssigkeiten, Steuerungsbefehlen, Datenpaketen, etc.

Folglich ist nicht nur die erste Tragstruktur T3 mit der zweiten Tragstruktur T4 lösbar verbunden, sondern auch Funktionskomponenten des ersten Funktionsmoduls 3 mit Funktionskomponenten des zweiten Funktionsmoduls 4.

Folglich bilden das erste Funktionsmodul 3 und das zweite Funktionsmodul 4 jeweils eine tragstrukturelle und in Bezug auf deren Funktionskomponenten funktionelle modulare Einheit.

Das erste Funktionsmodul 3 und das zweite Funktionsmodul 4 können mitsamt der zugehörigen Tragstrukturen T3 und T4 und mitsamt der zugehörigen Funktionskomponenten jeweils als tragstrukturelle und funktionelle Einheit modular aus der Fahrzeugkonstruktion 100 entfernt werden und z. B. durch ein anderes Funktionsmodul ersetzt werden. Alternativ oder ergänzend kann auch ein zusätzliches Funktionsmodul zwischen das Vorderachsmodul 1 und das Hinterachsmodul 2 aufgenommen werden.

Die Fahrzeugkonstruktion 100 kann somit nachträglich und insbesondere auch nach der ursprünglichen Endmontage mittels der als tragstrukturelle und funktionelle Einheiten ausgebildeten Funktionsmodule 3 und 4 modular umkonfiguriert werden.

Durch Kombination, Erweiterung und/oder Austausch der hierin offenbarten Module (insbesondere das Vorderachsmodul 1, das Hinterachsmodul 2 und/oder zumindest eines der Funktionsmodule 3 und 4) kann eine modular individuell veränderbare Fahrzeugkonstruktion 100 erzeugt werden.

Die hierin offenbarten Module können z. B. in ihrer Anordnung entsprechend ihrer Lastverteilung in der Fahrzeugkonstruktion 100 variieren.

Im Bedarfsfall können nachträglich eines oder mehrere der hierin offenbarten Module ausgetauscht werden und somit das Anwendungsprofil des Gesamtfahrzeugs im Laufe der Fahrzeuglebensdauer verändert werden.

Im Bedarfsfall kann z. B. zusätzlich ein Modul, z. B. ein Leermodul, zwischen das Vorderachsmodul 1 und das Hinterachsmodul 2 eingefügt werden, um z. B. einen definierten Radstand abbilden zu können.

Die Fahrzeugkonstruktion 100 und somit insbesondere das Gesamtfahrzeug kann somit aus Funktionsmodulen 3 und 4 mit voneinander abgegrenzten Funktionen (Aufgaben) aufgebaut und zusammengesetzt werden.

Die Ausstattung der Funktionsmodule 3 und 4 mit Funktionskomponenten erfolgt zweckmäßig nach ihren funktionsspezifischen Anforderungen.

Abweichungen der Funktionskomponenten können innerhalb der Funktionsmodule 3 und 4 und innerhalb ihrer Modulgrenzen abgebildet werden.

Im Bedarfsfall kann somit die Fahrzeugkonstruktion 100 erweitert und/oder umkonfiguriert werden, ohne in die Gesamtfahrzeugstruktur eingreifen zu müssen.

Die Funktionsmodule 3 und 4 können vorzugsweise autark und/oder vorzugsweise unabhängig einer Endmontagelinie ausgestattet werden. Dies unterstützt eine funktionsbezogene Spezialisierung, sowohl in der Entwicklung als auch in der Produktion. Damit lassen sich flexible Lokalisierungskonzepte realisieren.

Die Modulgrenze des jeweiligen Funktionsmoduls 3 und 4 bildet vorzugsweise deren Funktionsgrenze.

Sämtliche spezifischen Funktionskomponenten können z. B. innerhalb des jeweiligen Funktionsmoduls 3 und 4 abgebildet werden. Beispielsweise können alle Funktionskomponenten zur Luftaufbereitung in einem Technikmodul zusammengefasst werden, wohingegen z. B alle Funktionskomponenten einer Traktionsbatterie in einem Energiemodul zusammengefasst werden können. Werden im Laufe des Produktlebenszyklus Funktionskomponenten verändert, hinzugefügt oder eliminiert, reduziert sich z. B. der Dokumentationsaufwand nur auf das jeweilige Funktionsmodul, ohne auf die Gesamtfahrzeug-Dokumentation Bezug nehmen zu müssen.

Es ist möglich, die in den Figuren gezeigten Tragstrukturen T3 und T4 in Querrichtung Q der Fahrzeugkonstruktion 100 zu verlängern, z. B. in dem Maße, dass die Längsträgersegmente 3.1 bis 3.4 der ersten Tragstruktur 3 und die Längsträgersegmente 4.1 bis 4.4 der zweiten der Tragstruktur T4 sich beidseitig seitlich außerhalb der Innenseiten der Räder erstrecken und z. B. im Wesentlichen bis zur maximalen Gesamtfahrzeugbreite reichen. Somit kann z. B. die maximale Länge der jeweiligen Tragstruktur T3 und T4 in Querrichtung Q der Fahrzeugkonstruktion 100 z. B. zumindest 80%, zumindest 90% oder zumindest 95% der maximalen Länge des Nutzfahrzeugs in Querrichtung Q der Fahrzeugkonstruktion 100 entsprechen.

Es ist möglich, dass die Funktionskomponenten eine eigene Tragkonstruktion (z. B. Traggerüst, Tragkorb, Tragplatten, etc.) umfassen und die Tragkonstruktion einen mittragenden und/oder aussteifenden Teil der zugehörigen Tragstruktur T3, T4 bildet. Dadurch kann die Tragkonstruktion in die jeweilige Tragstruktur T3, T4 integriert werden, so dass die Tragstruktur T3, T4 tragstrukturell entlastet wird und somit zweckmäßig tragstrukturell schwächer dimensioniert werden kann.

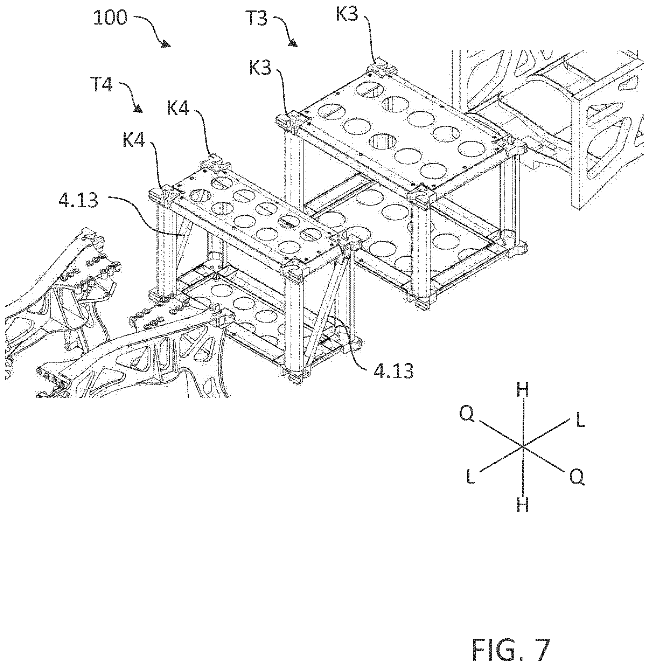

Figur 7 zeigt eine Fahrzeugkonstruktion 100 gemäß einer Ausführungsform der Erfindung, die im Wesentlichen der Ausführungsform der Figuren 1 bis 6 entsprechen kann.

Eine Besonderheit ist aber, dass die Tragstruktur T4 zwei in jeweils einer im Wesentlichen vertikalen Ebene ausgerichtete Diagonalverstrebungen 4.13 zur Aussteifung der Tragstruktur T4 umfasst, wobei sich die jeweilige vertikale Ebene in Längsrichtung L der Fahrzeugkonstruktion 100 erstreckt. Alternativ oder ergänzend zu den Diagonalverstrebungen 4.13 können Platten verwendet werden. Die Tragstruktur T3 kann ebenfalls derartige Diagonalverstrebungen und/oder Platten umfassen, sofern erforderlich.

Die hierhin erwähnten Platten und/oder Diagonalverstrebungen dienen vorzugsweise zur Erhöhung insbesondere der Torsionssteifigkeit der zugehörigen Tragstruktur und können z. B. in seitlicher Anordnung zumindest einen Teil einer Seitencrasheinrichtung zum Schutz der Funktionskomponenten vor einem Seitenaufprall bilden.

Die Erfindung ist nicht auf die oben beschriebenen bevorzugten Ausführungsformen beschränkt. Vielmehr ist eine Vielzahl von Varianten und Abwandlungen möglich, die ebenfalls von dem Erfindungsgedanken Gebrauch machen und deshalb in den Schutzbereich fallen. Darüber hinaus beansprucht die Erfindung auch Schutz für den Gegenstand und die Merkmale der Unteransprüche unabhängig von den in Bezug genommenen Merkmalen und Ansprüchen.

### Bezugszeichenliste

- 1: Vorderachsmodul
- 1.1 und 1.2: Längsträgersegmente

- 2: Hinterachsmodul
- 2.1 und 2.2: Längsträgersegmente

- 3: Funktionsmodul, insbesondere erstes Funktionsmodul
- 3.1 bis 3.4: Längsträgersegmente
- 3.5 bis 3.8: Querträgersegmente
- 3.9 bis 3.12: Vertikalträgersegmente
- K3: Anschlussknoten

- 4: Funktionsmodul, insbesondere zweites Funktionsmodul
- 4.1 bis 4.4: Längsträgersegmente
- 4.5 bis 4.8: Querträgersegmente
- 4.9 bis 4.12: Vertikalträgersegmente
- 4.13: Diagonalverstrebung, insbesondere Diagonalträgersegment
- K4: Anschlussknoten

- 5: Modul zur Aufnahme einer Nutzfahrzeug-Kabine

- L: Längsrichtung der Fahrzeugkonstruktion
- Q: Querrichtung der Fahrzeugkonstruktion
- H: Höhenrichtung der Fahrzeugkonstruktion
- 100: Fahrzeugkonstruktion

## Patentansprüche

1. Fahrzeugkonstruktion (100), vorzugsweise ein in seiner Längsrichtung (L) tragstrukturell und vorzugsweise funktionell modular aufgebautes Fahrzeug-Chassis (100), mit einem Vorderachsmodul (1) und einem Hinterachsmodul (2), wobei
zwischen dem Vorderachsmodul (1) und dem Hinterachsmodul (2) zumindest zwei Funktionsmodule (3, 4) angeordnet sind und die Funktionsmodule (3, 4) jeweils eine Tragstruktur (T3, T4) aufweisen mit in Querrichtung (Q) der Fahrzeugkonstruktion (100) voneinander beabstandeten Längsträgersegmenten (3.1-3.4, 4.1-4.4), wobei die Längsträgersegmente (3.1-3.4, 4.1-4.4) der Tragstrukturen (T3, T4) in Querrichtung (Q) der Fahrzeugkonstruktion (100) voneinander beabstandete Chassis-Längsträgerkonstruktionen bilden,
**dadurch gekennzeichnet, dass**
- die jeweilige Tragstruktur (T3, T4) einzelne und/oder separate Anschlussknoten (K3, K4) aufweist,
- das Vorderachsmodul (1) einzelne und/oder separate Anschlussknoten aufweist, und/oder
- das Hinterachsmodul (2) einzelne und/oder separate Anschlussknoten aufweist, wobei
die Anschlussknoten (K3, K4) der jeweiligen Tragstruktur (T3, T4) zur lösbaren und wiederholt montierbare Verbindung mit jeweils einem Längsträgersegment (3.1-3.4, 4.1-4.4), einem Querträgersegment (3.5-3.8, 4.5-4.8) und einem Vertikalträgersegment (3.9-3.12, 4.9-4.12) der jeweiligen Tragstruktur (T3, T4) dienen,
und wobei
die jeweilige Tragstruktur (T3, T4) vier vordere Anschlussknoten (K3, K4) und vier hintere Anschlussknoten (K3, K4) aufweist und die vier vorderen Anschlussknoten (K3, K4) und die vier hinteren Anschlussknoten (K3, K4) Eckpunkte der jeweiligen Tragstruktur (T3, T4) bilden.

2. Fahrzeugkonstruktion (100) nach Anspruch 1, **dadurch gekennzeichnet, dass** die Tragstrukturen (T3, T4) lösbar und wiederholt montierbar miteinander verbunden sind.

3. Fahrzeugkonstruktion (100) nach Anspruch 1 oder 2, **dadurch gekennzeichnet, dass** die jeweilige Tragstruktur (T3, T4)
- beidseitig zwei in Höhenrichtung (H) der Fahrzeugkonstruktion (100) voneinander beabstandete Längsträgersegmente (3.1-3.4, 4.1-4.4) aufweist, und/oder
- beidseitig zwei in Längsrichtung (L) der Fahrzeugkonstruktion (100) voneinander beabstandete Vertikalträgersegmente (3.9-3.12, 4.9-4.12) aufweist.

4. Fahrzeugkonstruktion (100) nach einem der vorhergehenden Ansprüche, **dadurch gekennzeichnet, dass** die jeweilige Tragstruktur (T3, T4) zumindest zwei in Längsrichtung (L) der Fahrzeugkonstruktion (100) voneinander beabstandete Querträgersegmente (3.5-3.8, 4.5-4.8) aufweist.

5. Fahrzeugkonstruktion (100) nach einem der vorhergehenden Ansprüche, **dadurch gekennzeichnet, dass** die jeweilige Tragstruktur (T3, T4) zwei obere in Längsrichtung (L) der Fahrzeugkonstruktion (100) voneinander beabstandete Querträgersegmente (3.5-3.6, 4.5-4.6) und zwei untere in Längsrichtung (L) der Fahrzeugkonstruktion (100) voneinander beabstandete Querträgersegmente (3.7-3.8, 4.7-4.8) aufweist.

6. Fahrzeugkonstruktion (100) nach einem der vorhergehenden Ansprüche, **dadurch gekennzeichnet, dass** benachbarte Anschlussknoten (K3, K4) der Tragstrukturen (T3, T4) zur lösbaren und wiederholt montierbare Verbindung der Tragstrukturen (T3, T4) dienen, so dass die Tragstrukturen (T3, T4) über lösbar aneinander montierte Anschlussknoten (K3, K4) miteinander verbunden sind.

7. Fahrzeugkonstruktion (100) nach einem der vorhergehenden Ansprüche, **dadurch gekennzeichnet, dass**
- benachbarte Anschlussknoten des Vorderachsmoduls (1) und einer der Tragstrukturen (T3) zur lösbaren Verbindung des Vorderachsmoduls (1) mit der Tragstruktur (T3) dienen, so dass die Tragstruktur (T3) und das Vorderachsmodul (1) über lösbar aneinander montierte Anschlussknoten miteinander verbunden sind, und/oder
- benachbarte Anschlussknoten des Hinterachsmoduls (2) und einer der Tragstrukturen (T4) zur lösbaren Verbindung des Hinterachsmoduls (2) mit der Tragstruktur (T4) dienen, so dass die Tragstruktur (T4) und das Hinterachsmodul (2) über lösbar aneinander montierte Anschlussknoten lösbar miteinander verbunden sind.

8. Fahrzeugkonstruktion (100) nach einem der vorhergehenden Ansprüche, **dadurch gekennzeichnet, dass** aneinander montierte Anschlussknoten
- in Längsrichtung (L) der Fahrzeugkonstruktion (100) auf Stoß aneinander anliegen, und/oder
- über jeweils eine in Höhen- und in Querrichtung (H, Q) der Fahrzeugkonstruktion (100) ausgerichtete Schnittebene voneinander trennbar sind.

9. Fahrzeugkonstruktion (100) nach einem der vorhergehenden Ansprüche, **dadurch gekennzeichnet, dass** die jeweilige Tragstruktur (T3, T4) eine Quaderform bildet und die Quaderform durch die Anschlussknoten (K3, K4) und/oder die Längsträgersegmente, die Querträgersegmente und vorzugsweise die Vertikalträgersegmente der jeweiligen Tragstruktur (T3, T4) definiert wird.

10. Fahrzeugkonstruktion (100) nach einem der vorhergehenden Ansprüche, **dadurch gekennzeichnet, dass**
- das Vorderachsmodul (1) in Querrichtung (Q) der Fahrzeugkonstruktion (100) voneinander beabstandete Längsträgersegmente (1.1.-1.2) aufweist und die Längsträgersegmente (1.1-1.2) des Vorderachsmoduls (1) in Querrichtung (Q) der Fahrzeugkonstruktion (100) voneinander beabstandete Chassis-Längsträgerkonstruktionen bilden, und/oder
- das Hinterachsmodul (2) in Querrichtung (Q) der Fahrzeugkonstruktion (100) voneinander beabstandete Längsträgersegmente (2.1.-2.2) aufweist und die Längsträgersegmente (2.1-2.2) des Hinterachsmoduls (2) in Querrichtung (Q) der Fahrzeugkonstruktion (100) voneinander beabstandete Chassis-Längsträgerkonstruktionen bilden.

11. Fahrzeugkonstruktion (100) nach einem der vorhergehenden Ansprüche, **dadurch gekennzeichnet, dass** die Tragstrukturen (T3, T4) selbstragend ausgeführt sind.

12. Fahrzeugkonstruktion (100) nach einem der vorhergehenden Ansprüche, **dadurch gekennzeichnet, dass** die Funktionsmodule (3, 4) mit unterschiedlichen Funktionskomponenten ausgestattet sind und eine oder mehrere lösbare mediale Schnittstellen vorhanden sind, um eine oder mehrere Funktionskomponenten des einen Funktionsmoduls (3) mit einer oder mehreren Funktionskomponenten des anderen Funktionsmoduls (4) lösbar zu verbinden, so dass nicht nur die Tragstrukturen (T3, T4) der Funktionsmodule (3, 4) lösbar miteinander verbunden sind, sondern auch die Funktionskomponenten der Funktionsmodule (3, 4).

13. Fahrzeugkonstruktion (100) nach einem der vorhergehenden Ansprüche, **dadurch gekennzeichnet, dass** das jeweilige Funktionsmodul (3, 4) mitsamt seiner Tragstruktur (T3, T4) und mitsamt seinen Funktionskomponenten als tragstrukturelle und funktionelle Einheit aus der Fahrzeugkonstruktion (100) entfernbar ist und vorzugsweise durch ein anderes Funktionsmodul ersetzbar ist.

14. Fahrzeugkonstruktion (100) nach einem der vorhergehenden Ansprüche, **dadurch gekennzeichnet, dass** das Vorderachsmodul (1) und/oder das Hinterachsmodul (2) mit Rädern versehen ist, deren Innenseiten in Querrichtung (Q) der Fahrzeugkonstruktion (100) voneinander beabstandet sind und sich die Längsträgersegmente (3.1-3.4, 4.1-4.4) der Tragstrukturen (T3, T4) beidseitig seitlich außerhalb der Innenseiten der Räder erstrecken.

15. Fahrzeugkonstruktion (100) nach einem der vorhergehenden Ansprüche, **dadurch gekennzeichnet, dass** die Funktionsmodule (3, 4)
- ein Energiemodul (4) umfassen, wobei dessen Funktionskomponenten zumindest ein Energiespeichersystem und/oder eine Traktionsbatterieanordnung zur Versorgung eines Elektromotors zur Fortbewegung der Fahrzeugkonstruktion (100) umfassen, und/oder
- ein Technikmodul (3) umfassen, wobei dessen Funktionskomponenten eine Luftaufbereitungseinrichtung, zumindest einen Druckluftspeicher, zumindest ein Pumpen- und Kühlsystem, ein Beladungs- und Betankungssystem, ein elektronisches Bremsassistenzsystem und/oder ein Antiblockiersystem umfassen.

16. Fahrzeugkonstruktion (100) nach einem der vorhergehenden Ansprüche, **dadurch gekennzeichnet, dass** die Fahrzeugkonstruktion (100) zumindest einen Elektromotor zur Fortbewegung der Fahrzeugkonstruktion (100) umfasst und der zumindest eine Elektromotor in einem der Funktionsmodule (3, 4) untergebracht ist oder durch das Hinterachsmodul (2) getragen wird.

17. Fahrzeugkonstruktion (100) nach Anspruch 15 oder 16, **dadurch gekennzeichnet, dass** in Längsrichtung (L) der Fahrzeugkonstruktion (100) das Energiemodul (4) hinter dem Technikmodul (3) angeordnet ist oder umgekehrt.

18. Fahrzeugkonstruktion (100) nach einem der vorhergehenden Ansprüche, **dadurch gekennzeichnet, dass** die Fahrzeugkonstruktion (100) ein Modul (5) zur Aufnahme einer Nutzfahrzeug-Kabine aufweist und das Modul (5) auf das Vorderachsmodul (1) aufgesetzt ist.

19. Fahrzeugkonstruktion (100) nach einem der vorhergehenden Ansprüche, **dadurch gekennzeichnet, dass** zumindest eine der Tragstrukturen (T3, T4)
- zumindest eine in einer im Wesentlichen horizontalen Ebene ausgerichtete Platte und/oder Diagonalverstrebung zur Aussteifung der Tragstruktur (T3, T4) umfasst, und/oder
- zumindest eine in einer im Wesentlichen vertikalen Ebene ausgerichtete Platte und/oder Diagonalverstrebung (4.13) zur Aussteifung der Tragstruktur (T3, T4) umfasst.

20. Fahrzeugkonstruktion (100) nach einem der vorhergehenden Ansprüche, **dadurch gekennzeichnet, dass** die Funktionsmodule (3, 4) mit unterschiedlichen Funktionskomponenten ausgestattet sind und zumindest eine der Funktionskomponenten eine eigene Tragkonstruktion umfasst und die Tragkonstruktion einen mittragenden und/oder aussteifenden Teil der zugehörigen Tragstruktur (T3, T4) bildet.

21. Fahrzeugkonstruktion (100) nach einem der vorhergehenden Ansprüche, **dadurch gekennzeichnet, dass** zumindest eine der Tragstrukturen (T3, T4) mit einer Seitencrasheinrichtung versehen ist, um Funktionskomponenten in der zugehörigen Tragstruktur (T3, T4) vor einem Seitencrash zu schützen.

22. Nutzfahrzeug, vorzugsweise Lastkraftwagen, mit einer Fahrzeugkonstruktion (100) nach einem der vorhergehenden Ansprüche.

23. Nutzfahrzeug nach Anspruch 22, **dadurch gekennzeichnet, dass** das Nutzfahrzeug eine maximale Länge in Querrichtung (Q) der Fahrzeugkonstruktion (100) aufweist und zumindest eine der Tragstrukturen (T3, T4) eine maximale Länge in Querrichtung (Q) der Fahrzeugkonstruktion (100) aufweist, wobei die maximale Länge der Tragstruktur (T3, T4) in Querrichtung (Q) der Fahrzeugkonstruktion (100) zumindest 80%, zumindest 90% oder zumindest 95% der maximalen Länge des Nutzfahrzeugs in Querrichtung (Q) der Fahrzeugkonstruktion (100) entspricht.

## Claims

1. A vehicle structure (100), preferably a vehicle chassis (100) which in its longitudinal direction (L) is of structurally and preferably functionally modular construction, having a front-axle module (1) and a rear-axle module (2), wherein at least two functional modules (3, 4) are disposed between the front-axle module (1) and the rear-axle module (2), and the functional modules (3, 4) have in each case a supporting structure (T3, T4) having longitudinal member segments (3.1-3.4, 4.1-4.4) which are mutually spaced apart in the transverse direction (Q) of the vehicle structure (100), wherein the longitudinal member segments (3.1-3.4, 4.1-4.4) of the supporting structures (T3, T4) form longitudinal chassis member structures which are mutually spaced apart in the transverse direction (Q) of the vehicle structure (100), **characterized in that**
- the respective supporting structure (T3, T4) has individual and/or separate connection nodes (K3, K4),
- the front-axle module (1) has individual and/or separate connection nodes, and/or
- the rear-axle module (2) has individual and/or separate connection nodes,
wherein
the connection nodes (K3, K4) of the respective supporting structure (T3, T4) serve for the releasable and repeatedly fastenable connection to in each case one longitudinal member segment (3.1-3.4, 4.1-4.4), one cross member segment (3.5-3.8, 4.5-4.8) and one vertical member segment (3.9-3.12, 4.9-4.12) of the respective supporting structure (T3, T4) ;
and wherein
the respective supporting structure (T3, T4) has four front connection nodes (K3, K4) and four rear connection nodes (K3, K4), and the four front connection nodes (K3, K4) and the four rear connection nodes (K3, K4) form corner points of the respective supporting structure (T3, T4).

2. The vehicle structure (100) according to Claim 1, **characterized in that** the supporting structures (T3, T4) are connected to one another in a releasable and repeatedly fastenable manner.

3. The vehicle structure (100) according to Claim 1 or 2, **characterized in that** the respective supporting structure (T3, T4)
- on both sides has two longitudinal member segments (3.1-3.4, 4.1-4.4) which are mutually spaced apart in the height direction (H) of the vehicle structure (100); and/or
- on both sides has two vertical member segments (3.9-3.12, 4.9-4.12) which are mutually spaced apart in the longitudinal direction (L) of the vehicle structure (100).

4. The vehicle structure (100) according to one of the preceding claims, **characterized in that** the respective supporting structure (T3, T4) has at least two cross member segments (3.5-3.8, 4.5-4.8) which are mutually spaced apart in the longitudinal direction (L) of the vehicle structure (100).

5. The vehicle structure (100) according to one of the preceding claims, **characterized in that** the respective supporting structure (T3, T4) has two upper cross member segments (3.5-3.6, 4.5-4.6) which are mutually spaced apart in the longitudinal direction (L) of the vehicle structure (100), and two lower cross member segments (3.7-3.8, 4.7-4.8) which are mutually spaced apart in the longitudinal direction (L) of the vehicle structure (100).

6. The vehicle structure (100) according to one of the preceding claims, **characterized in that** adjacent connection nodes (K3, K4) of the supporting structures (T3, T4) serve for the releasable and repeatedly fastenable connection of the supporting structures (T3, T4) in such a way that the supporting structures (T3, T4) are connected to one another by way of connection nodes (K3, K4) releasably fastened to one another.

7. The vehicle structure (100) according to one of the preceding claims, **characterized in that**
- adjacent connection nodes of the front-axle module (1) and of one of the supporting structures (T3) serve for the releasable connection of the front-axle module (1) to the supporting structure (T3) in such a way that the supporting structure (T3) and the front-axle module (1) are connected to one another by way of connection modes releasably fastened to one another, and/or
- adjacent connection nodes of the rear-axle module (2) and of one of the supporting structures (T4) serve for the releasable connection of the rear-axle module (2) to the supporting structure (T4) in such a way that the supporting structure (T4) and the rear-axle module (2) are connected to one another by way of connection nodes releasably fastened to one another.

8. The vehicle structure (100) according to one of the preceding claims, **characterized in that** connection nodes fastened to one another
- abut one another in the longitudinal direction (L) of the vehicle structure (100), and/or
- are able to be disconnected from one another by way of a section plane which is oriented in the height direction and in the transverse direction (H, Q) of the vehicle structure (100).

9. The vehicle structure (100) according to one of the preceding claims, **characterized in that** the respective supporting structure (T3, T4) forms a cuboidal shape, and the cuboidal shape is defined by the connection nodes (K3, K4) and/or the longitudinal member segments, the cross member segments and preferably the vertical member segments of the respective supporting structure (T3, T4).

10. The vehicle structure (100) according to one of the preceding claims, **characterized in that**
- the front-axle module (1) has longitudinal member segments (1.1.-1.2) which are mutually spaced apart in the transverse direction (Q) of the vehicle structure (100), and the longitudinal member segments (1.1-1.2) of the front-axle module (1) form longitudinal chassis member structures which are mutually spaced apart in the transverse direction (Q) of the vehicle structure (100), and/or
- the rear-axle module (2) has longitudinal member segments (2.1.-2.2) which are mutually spaced apart in the transverse direction (Q) of the vehicle structure (100), and the longitudinal member segments (2.1-2.2) of the rear-axle module (2) form longitudinal chassis member structures which are spaced apart in the transverse direction (Q) of the vehicle structure (100).

11. The vehicle structure (100) according to one of the preceding claims, **characterized in that** the supporting structures (T3, T4) are embodied to be self-supporting.

12. The vehicle structure (100) according to one of the preceding claims, **characterized in that** the functional modules (3, 4) are equipped with dissimilar functional components, and there are one or a plurality of releasable medial interfaces in order to releasably connect one or a plurality of functional components of the one functional module (3) to one or a plurality of functional components of the other functional module (4) in such a way that not only the supporting structures (T3, T4) of the functional modules (3, 4) but also the functional components of the functional modules (3, 4) are releasably connected to one another.

13. The vehicle structure (100) according to one of the preceding claims, **characterized in that** the respective functional module (3, 4), including its supporting structure (T3, T4) and including its functional components, is removable from the vehicle structure (100) as a structural and functional unit, and is preferably replaceable by another functional module.

14. The vehicle structure (100) according to one of the preceding claims, **characterized in that** the front-axle module (1) and/or the rear-axle module (2) are/is provided with wheels, the insides of the latter being mutually spaced apart in the transverse direction (Q) of the vehicle structure (100), and the longitudinal member segments (3.1-3.4, 4.1-4.4) of the supporting structures (T3, T4) on both sides extend laterally outside the insides of the wheels.

15. The vehicle structure (100) according to one of the preceding claims, **characterized in that** the functional modules (3, 4) comprise
- an energy module (4), wherein the functional components thereof comprise an energy storage system and/or a traction battery assembly for supplying an electric motor for propelling the vehicle structure (100); and/or
- a technical module (3), wherein the functional components thereof comprise an air conditioning device, at least one compressed air reservoir, at least one pumping and cooling system, a charging and fuelling system, an electronic brake assistance system and/or an anti-blocking system.

16. The vehicle structure (100) according to one of the preceding claims, **characterized in that** the vehicle structure (100) comprises at least one electric motor for propelling the vehicle structure (100), and the at least one electric motor is accommodated in one of the functional modules (3, 4) or is supported by the rear-axle module (2).

17. The vehicle structure (100) according to Claim 15 or 16, **characterized in that** the energy module (4) in the longitudinal direction (L) of the vehicle structure (100) is disposed behind the technical module (3), or vice versa.

18. The vehicle structure (100) according to one of the preceding claims, **characterized in that** the vehicle structure (100) has a module (5) for receiving a commercial vehicle cab, and the module (5) is placed onto the front-axle module (1).

19. The vehicle structure (100) according to one of the preceding claims, **characterized in that** at least one of the supporting structures (T3, T4) comprises
- at least one plate and/or diagonal bracing for stiffening the supporting structure (T3, T4), which is aligned in a substantially horizontal plane, and/or
- comprises at least one plate and/or diagonal bracing (4.13) for stiffening the supporting structure (T3, T4), which is aligned in a substantially vertical plane.

20. The vehicle structure (100) according to one of the preceding claims, **characterized in that** the functional modules (3, 4) are equipped with dissimilar functional components, and at least one of the functional components comprises a dedicated supporting structure, and the supporting structure forms a participating supporting and/or stiffening part of the associated supporting structure (T3, T4) .

21. The vehicle structure (100) according to one of the preceding claims, **characterized in that** at least one of the supporting structures (T3, T4) is provided with a side impact installation in order to protect the functional components in the associated supporting structure (T3, T4) in the event of a side impact.

22. A commercial vehicle, preferably a motor truck, having a vehicle structure (100) according to one of the preceding claims.

23. The commercial vehicle according to Claim 22, **characterized in that** the commercial vehicle has a maximum length in the transverse direction (Q) of the vehicle structure (100) and at least one of the supporting structures (T3, T4) has a maximum length in the transverse direction (Q) of the vehicle structure (100), wherein the maximum length of the supporting structure (T3, T4) in the transverse direction (Q) of the vehicle structure (100) corresponds to at least 80%, at least 90%, or at least 95%, of the maximum length of the commercial vehicle in the transverse direction (Q) of the vehicle structure (100).

## Revendications

1. Construction de véhicule (100), de préférence un châssis de véhicule (100) qui est structurellement porteur et de préférence fonctionnellement modulaire dans sa direction longitudinale (L) et qui comprend un module formant essieu avant (1) et un module formant essieu arrière (2),
au moins deux modules fonctionnels (3, 4) étant disposés entre le module formant essieu avant (1) et le module formant essieu arrière (2) et les modules fonctionnels (3, 4) comportant chacun une structure porteuse (T3, T4) comprenant des segments de support longitudinal (3.1 à 3.4, 4.1 à 4.4) espacés les uns des autres dans la direction transversale (Q) de la construction de véhicule (100), les segments de support longitudinal (3.1-3.4, 4.14.4) des structures porteuse (T3, T4) formant des constructions de support longitudinal de châssis espacées les unes des autres dans la direction transversale (Q) de la construction de véhicule (100),
**caractérisée en ce que**
- la structure porteuse respective (T3, T4) comporte des noeuds de raccordement individuels et/ou distincts (K3, K4),
- le module formant essieu avant (1) comporte des noeuds de raccordement individuels et/ou distincts, et/ou
- le module formant essieu arrière (2) comporte des noeuds de raccordement individuels et/ou distincts,
les noeuds de raccordement (K3, K4) de la structure porteuse respective (T3, T4) servant à réaliser une liaison amovible et à capacité de montage répété respectivement avec un segment de support longitudinal (3.1-3.4, 4.1-4.4), un segment de support transversal (3.5-3.8, 4.5-4.8) et un segment de support vertical (3.93.12, 4.9-4.12) de la structure porteuse respective (T3, T4),
et
la structure porteuse respective (T3, T4) comportant quatre noeuds de raccordement avant (K3, K4) et quatre noeuds de raccordement arrière (K3, K4) et les quatre noeuds de raccordement avant (K3, K4) et les quatre noeuds de raccordement arrière (K3, K4). K4) formant des points d'angle de la structure porteuse respective (T3, T4).

2. Construction de véhicule (100) selon la revendication 1, **caractérisée en ce que** les structures porteuse (T3, T4) sont reliées entre elles de manière amovible et avec une capacité de montage répété.

3. Construction de véhicule (100) selon la revendication 1 ou 2, **caractérisée en ce que** la structure porteuse respective (T3, T4) comporte
- des deux côtés, deux segments de support longitudinal (3.1-3.4, 4.1-4.4) espacés l'un de l'autre dans la direction de la hauteur (H) de la construction de véhicule (100), et/ou
- des deux côtés, deux segments de support verticaux (3.9 à 3.12, 4.9 à 4.12) espacés l'un de l'autre dans la direction longitudinale (L) de la construction de véhicule (100).

4. Construction de véhicule (100) selon l'une des revendications précédentes, **caractérisée en ce que** la structure porteuse respective (T3, T4) comporte au moins deux segments de support transversaux (3.5-3.8, 4.54.8) espacés l'un de l'autre dans la direction longitudinale (L) de la construction de véhicule (100).

5. Construction de véhicule (100) selon l'une des revendications précédentes, **caractérisée en ce que** la structure porteuse respective (T3, T4) comporte deux segments de support transversaux supérieurs (3,5-3,6, 4,5-4,6) espacés l'un de l'autre dans la direction longitudinale (L) de la construction de véhicule (100) et deux segments de support transversaux inférieurs (3.7-3.8, 4.7-4.8) espacés l'un de l'autre dans la direction longitudinale (L) de la construction de véhicule (100).

6. Construction de véhicule (100) selon l'une des revendications précédentes, **caractérisée en ce que** des noeuds de raccordement adjacents (K3, K4) des structures porteuses (T3, T4) servent à réaliser la liaison amovible et à capacité de montage répété avec les structures porteuses (T3, T4) de sorte que les structures porteuses (T3, T4) soient reliées entre elles par le biais de noeuds de raccordement (K3, K4) montés de manière amovible les uns sur les autres.

7. Construction de véhicule (100) selon l'une des revendications précédentes, **caractérisée en ce que**
- des noeuds de raccordement adjacents du module formant essieu avant (1) et de l'une des structures porteuses (T3) servent à réaliser la liaison amovible du module formant essieu avant (1) avec la structure porteuse (T3) de sorte que la structure porteuse (T3) et le module formant essieu avant (1) soient reliés l'un à l'autre par le biais de noeuds de raccordement montés de manière amovible les uns sur les autres, et/ou
- des noeuds de raccordement adjacents du module formant essieu arrière (2) et l'une des structures porteuses (T4) servent à réaliser la liaison amovible du module formant essieu arrière (2) avec la structure porteuse (T4) de sorte que la structure porteuse (T4) et le module formant essieu arrière (2) soient reliés de manière amovible l'un à l'autre par le biais de noeuds de raccordement qui sont montés de manière amovible les uns sur les autres.

8. Construction de véhicule (100) selon l'une des revendications précédentes, **caractérisée en ce que** des noeuds de raccordement montés les uns sur les autres
- sont en appui en butée les uns sur ls autres dans la direction longitudinale (L) de la construction de véhicule (100), et/ou
- peuvent être séparés les uns des autres par le biais d'un plan de coupe orienté dans les directions verticale et transversale (H, Q) de la construction de véhicule (100) .

9. Construction de véhicule (100) selon l'une des revendications précédentes, **caractérisée en ce que** la structure porteuse respective (T3, T4) forme un parallélépipède et le parallélépipède est défini par les noeuds de raccordement (K3, K4) et/ou les segments de support longitudinaux, les segments de support transversaux et de préférence les segments de support verticaux de la structure porteuse respective (T3, T4).

10. Construction de véhicule (100) selon l'une des revendications précédentes, **caractérisée en ce que**
- le module formant essieu avant (1) comporte des segments de support longitudinaux (1.1.-1.2) espacés les uns des autres dans la direction transversale (Q) de la construction de véhicule (100) et les segments de support longitudinaux (1.1.-1.2) du module formant essieu avant (1) forment des constructions de support longitudinal de châssis espacées les unes des autres dans la direction transversale (Q) de la construction de véhicule (100), et/ou
- le module formant essieu arrière (2) comporte des segments de support longitudinaux (2.1.-2.2) espacés les uns des autres dans la direction transversale (Q) de la construction de véhicule (100) et les segments de support longitudinaux (2.1-2.2) du module formant essieu arrière (2) forment des constructions de support longitudinal de châssis espacées les unes des autres dans la direction transversale (Q) de la construction de véhicule (100).

11. Construction de véhicule (100) selon l'une des revendications précédentes, **caractérisée en ce que** les structures porteuses (T3, T4) sont conçues pour être autoporteuses.

12. Construction de véhicule (100) selon l'une des revendications précédentes, **caractérisée en ce que** les modules fonctionnels (3, 4) sont équipés de différents composants fonctionnels et une ou plusieurs interfaces média amovibles sont présentes pour relier de façon amovible un ou plusieurs composants fonctionnels d'un module fonctionnel (3) à un ou plusieurs composants fonctionnels de l'autre module fonctionnel (4) de façon à relier entre eux de manière amovible non seulement les structures porteuses (T3, T4) des modules fonctionnels (3, 4), mais également les composants fonctionnels des modules fonctionnels (3, 4).

13. Construction automobile (100) selon l'une des revendications précédentes, **caractérisée en ce que** le module fonctionnel respectif (3, 4) pourvu de sa structure porteuse (T3, T4) et de ses composants fonctionnels peut être retiré de la construction de véhicule (100) sous la forme d'une unité fonctionnelle et structurelle porteuse et être remplacé de préférence par un autre module fonctionnel.

14. Construction de véhicule (100) selon l'une des revendications précédentes, **caractérisée en ce que** le module formant essieu avant (1) et/ou le module formant essieu arrière (2) sont pourvu de roues dont les côtés intérieurs sont espacés les uns des autres dans la direction transversale (Q) de la construction de véhicule (100) et les segments de support longitudinal (3.1 à 3.4, 4.1 à 4.4) des structures porteuses (T3, T4) s'étendent latéralement des deux côtés à l'extérieur du côté intérieur des roues.

15. Construction de véhicule (100) selon l'une des revendications précédentes, **caractérisée en ce que** les modules fonctionnels (3, 4) comprennent
- un module d'énergie (4) dont les composants fonctionnels comprennent au moins un système de stockage d'énergie et/ou un ensemble de batterie de traction destinés à alimenter un moteur électrique pour déplacer la construction de véhicule (100), et/ou
- un module technique (3) dont les composants fonctionnels comprennent un dispositif de traitement de l'air, au moins un réservoir d'air comprimé, au moins un système de pompage et de refroidissement, un système de chargement et de ravitaillement, un système électronique d'assistance au freinage et/ou un système antiblocage.

16. Construction de véhicule (100) selon l'une des revendications précédentes, **caractérisée en ce que** la construction de véhicule (100) comprenant au moins un moteur électrique destiné à déplacer la construction de véhicule (100) et l'au moins un moteur électrique est logé dans l'un des modules fonctionnels (3, 4) ou est porté par le module formant essieu arrière (2).

17. Construction de véhicule (100) selon la revendication 15 ou 16, **caractérisée en ce que** le module d'énergie (4) est disposé derrière le module technique (3), ou inversement, dans la direction longitudinale (L) de la construction de véhicule (100).

18. Construction de véhicule (100) selon l'une des revendications précédentes, **caractérisée en ce que** la construction de véhicule (100) comporte un module (5) destiné à recevoir une cabine de véhicule utilitaire et le module (5) est placé sur le module formant essieu avant (1).

19. Construction de véhicule (100) selon l'une des revendications précédentes, **caractérisée en ce qu'**au moins une des structures porteuses (T3, T4) comprend
- au moins une plaque et/ou entretoise diagonale orientée dans un plan essentiellement horizontal et destinée à rigidifier la structure porteuse (T3, T4), et/ou
- au moins une plaque et/ou entretoise diagonale (4.13) orientée dans un plan essentiellement vertical et destinée à rigidifier la structure porteuse (T3, T4).

20. Construction de véhicule (100) selon l'une des revendications précédentes, **caractérisée en ce que** les modules fonctionnels (3, 4) sont équipés de différents composants fonctionnels et au moins un des composants fonctionnels comprend sa propre construction porteuse et la construction porteuse comprend une partie de support et/ou de rigidification de la structure porteuse associée (T3, T4) .

21. Construction de véhicule (100) selon l'une des revendications précédentes, **caractérisée en ce qu'**au moins une des structures porteuses (T3, T4) est pourvue d'un dispositif de collision latérale afin de protéger les composants fonctionnels dans la structure porteuse associée (T3, T4) contre une collision latérale.

22. Véhicule utilitaire, de préférence camion, comprenant une construction de véhicule (100) selon l'une des revendications précédentes.

23. Véhicule utilitaire selon la revendication 22, **caractérisé en ce que** le véhicule utilitaire présente une longueur maximale dans la direction transversale (Q) de la construction de véhicule (100) et au moins une des structures porteuse (T3, T4) présente une longueur maximale dans la direction transversale (Q) de la construction de véhicule (100), la longueur maximale de la structure porteuse (T3, T4) dans la direction transversale (Q) de la construction de véhicule (100) correspondant à au moins 80 %, au moins 90 % ou au moins 95 % de la longueur maximale du véhicule utilitaire dans la direction transversale (Q) de la construction de véhicule (100).
